# FASCICULE DE BREVET EUROPEEN

(11) **EP 3 041 192 B1**
(45) Date de publication et mention de la délivrance du brevet: **24.07.2019**
(21) Numéro de dépôt: 15203264.5
(22) Date de dépôt: 31.12.2015
(51) Int. Cl.: H04L 29/06, H04W 12/06

(54) **INFRASTRUCTURE D'AUTHENTIFICATION DE TÉLÉPHONES IP D'UN SYSTÈME TOIP PROPRIÉTAIRE PAR UN SYSTÈME EAP-TLS OUVERT**
AUTHENTIFIZIERUNGSINFRASTRUKTUR VON IP-TELEFONEN EINES PROPRIETÄREN TOIP-SYSTEMS ÜBER EIN OFFENES EAP-TLS-SYSTEM
AUTHENTICATION INFRASTRUCTURE FOR IP PHONES OF A PROPRIETARY TOIP SYSTEM BY AN OPEN EAP-TLS SYSTEM

(30) Priorité: 31.12.2014 FR 1403060
(43) Date de publication de la demande: 06.07.2016
(73) Titulaire: THALES, 92400 Courbevoie (FR)
(72) Inventeur: VENEZIA, Elodie, 92622 Gennevilliers Cedex (FR)
(74) Mandataire: Lavoix

(56) Documents cités:
- US-A1- 2012 131 329
- "Documentation - IEEE802.2x Configuration management - Administration Manual", , 29 octobre 2013 (2013-10-29), pages 1-140, XP055229293, Internet Archive: Wayback Machine Extrait de l'Internet: URL:https://web.archive.org/web/2013102922 0025/http:/wiki.unify.com/images/2/23/IEEE _802.1X_Configuration_Management.pdf [extrait le 2015-11-18]

## Description

La présente invention concerne la téléphonie sur un réseau IP (Internet Protocol) ou TOIP (Telephony Over Internet Protocol) et, plus particulièrement, la sécurisation de l'accès à un réseau IP par un téléphone IP.

Le document US 2012/0131329 divulgue une infrastructure conforme au préambule de la revendication 1.

### Architecture PKI

De manière générale, un certificat numérique permet d'identifier le titulaire du certificat, c'est-à-dire l'équipement informatique sur lequel est enregistré le certificat.

Tel que défini par le standard RFC 3280, un certificat est délivré et géré par un ensemble de composants matériels et logiciels appartenant à une architecture à clés publiques ou architecture PKI (pour « Public Key Infrastructure »).

Un certificat comporte des attributs (identification du titulaire, clé publique, date de validité du certificat, etc.), ainsi qu'une signature.

Suivant la technique des clés asymétriques, la clé publique correspond à une et une seule clé privée, enregistrée sur l'équipement titulaire.

L'usage de clés cryptographiques publique et privée permet, lors des transactions électroniques, de disposer de fonctions de sécurité importantes, telles que confidentialité, authentification, intégrité et non-répudiation.

Une architecture PKI comporte un titulaire, qui génère ou pour le compte duquel est générée une demande de certificat (CSR pour « Certificate Signing Request »), celle-ci comportant les attributs du certificat final ; une autorité d'enregistrement, qui effectue les vérifications d'usage sur les valeurs des attributs, en particulier sur l'identité du titulaire, et valide la demande de certificat ; une autorité de certification, qui signe la demande de certificat validée, de manière à générer le certificat. Le certificat est stocké de préférence par le titulaire.

### Système TOIP

Un système TOIP comporte des téléphones IP connectés à un réseau IP, par exemple le réseau IP local d'une entreprise. Les communications téléphoniques, en particulier la voix, sont alors acheminées à travers le réseau IP.

Avantageusement, un système TOIP permet de bénéficier de différents services supplémentaires. Pour la fourniture de ces services, le système TOIP comporte un serveur d'appel, connecté au réseau IP. Il permet l'authentification des téléphones, l'émission et la réception d'appels (de préférence de manière sécurisée), le transfert d'appel, le filtrage d'appel, etc. Un tel serveur d'appel est désigné sous le nom de PABX IP ou IPBX et correspond à l'évolution vers l'IP d'un autocommutateur téléphonique PABX traditionnel.

Par exemple, l'entreprise Cisco® distribue un système de TOIP comportant des téléphones IP Cisco® et un serveur d'appel Cisco®, dénommé « Cisco® Unified Communications Manager », de préférence dans sa version actuelle référencée 8.6.

Le serveur d'appel Cisco® du système de TOIP Cisco® intègre une architecture PKI, cite architecture PKI Cisco®. Elle comporte une autorité de certification, dénommée module de certification CAPF (Certificate Authority Proxy Function). Celle-ci est notamment propre à signer des demandes de certificat pour le compte des téléphones IP Cisco®. Le certificat Cisco® ainsi créer est stocké sur le téléphone IP Cisco® correspondant.

Le système TOIP Cisco® utilise ensuite ces certificats Cisco® pour l'authentification des téléphones IP Cisco®. Pour l'authentification, le protocole de sécurisation TLS (Transport Layer Security) est mis en oeuvre entre un téléphone IP Cisco® et le serveur d'appel Cisco®. Le protocole TLS a été normalisé par un groupe de travail de l'IETF (Internet Engineering Task Force). Une procédure de « poignée de main » (handshaking) est ainsi exécutée, au cours de laquelle les certificats Cisco® du téléphone IP Cisco® et du serveur d'appel Cisco® sont échangés, vérifiés, et une clé de chiffrement symétrique est négociée pour sécuriser les communications ultérieures.

### Système d'authentification EAP-TLS

Par ailleurs, les entreprises mettent en oeuvre des procédures d'authentification afin de contrôler l'accès à leur réseau IP local de tout équipement informatique.

Ainsi, par exemple, l'authentification IEEE 802.1X est un standard permettant de contrôler l'accès à un réseau IP local sur la base d'un certificat numérique.

Avec l'authentification IEEE 802.1X, il est possible de contrôler l'accès à chacun des ports d'un équipement réseau actif compatible. Indépendamment du type de connexion, chaque port se comporte comme une bascule à deux états : un état contrôlé en cas de succès de l'authentification de l'équipement connecté à ce port, et un état non contrôlé dans le cas contraire.

L'authentification IEEE 802.1X s'appuie sur un protocole EAP (Extensible Authentication Protocol) et sur un serveur d'authentification.

Tel que défini par le standard RFC 5216, EAP désigne la famille de protocoles, au sens réseau du terme, c'est-à-dire qu'il prévoit un échange de trames dans un format spécifique entre deux équipements, l'un fonctionnant en serveur, l'autre en client. Il comporte des méthodes d'authentification soit prédéfinies (MD5, OTP, Generic Token Card, ...), soit ajoutées. L'authentification peut être demandée par le client ou par le serveur.

Parmi les différents protocoles EAP, on connaît le protocole EAP-TLS, qui est un standard ouvert par rapport, par exemple, au protocole EAP LEAP de Cisco®, qui est une implémentation propriétaire du protocole EAP.

Le protocole EAP-TLS est un protocole EAP qui encapsule le protocole TLS.

Le protocole EAP-TLS utilise les certificats délivrés par une architecture PKI pour sécuriser les communications entre le client et le serveur : un certificat côté serveur et un certificat côté client.

Il est à noter que d'autres implémentations du protocole EAP, telles que les protocoles PEAP et EAP-TTLS, permettent de s'affranchir du certificat côté client.

Selon le protocole IEEE 802.1X, le procédé d'authentification entre un client EAP (équipement informatique) et un serveur EAP (port d'une machine du réseau auquel l'équipement informatique est connecté) est le suivant :
- Le client EAP émet un message EAP d'initialisation vers le serveur EAP ;
- le serveur EAP répond en émettant un message EAP de requête d'identité vers le client EAP ;
- Le client EAP envoie son nom utilisateur dans un message EAP de réponse vers le serveur EAP ;
- le serveur EAP transmet le nom utilisateur à un serveur d'authentification AAA, dans une requête d'accès selon un protocole AAA client/serveur particulier, le serveur EAP fonctionnant alors en tant que client du protocole AAA ;
- Le serveur d'authentification AAA répond au client EAP en lui transmettant (via le serveur EAP) le certificat du serveur AAA ;
- Le client EAP valide le certificat de serveur AAA;
- Le client EAP répond au serveur AAA en lui transmettant (via le serveur EAP) le certificat du client EAP ;
- Le serveur AAA valide le certificat du client EAP ;
- Le client EAP et le serveur AAA déterminent une clé WEP de cryptage ;
- Le serveur AAA transmet au serveur EAP un message AAA d'acceptation de la connexion, indicatif d'une authentification réussi, le message AAA d'acceptation contenant la clé WEP ;
- Le serveur EAP envoi au client EAP un message EAP de succès ;
- Le serveur EAP envoi au client EAP une clé de chiffrement publique et une longueur de clé de chiffrement publique, cryptée avec la clé WEP.

Il se trouve que l'annexe D du document de référence de l'authentification IEEE 802.1X mentionne, comme exemple de protocole et serveur d'authentification AAA, le seul protocole et serveur d'authentification RADIUS (Remote Authentication Dial-In User Service). Le système RADIUS est définit par le standard RFC 2865.

Ainsi, bien que l'authentification IEEE 802.1X ne soit pas liée explicitement au système RADIUS, toutes les mises en oeuvre de l'authentification IEEE 802.1X connues s'appuient sur le système RADIUS. Le système RADIUS est ainsi devenu un standard de fait.

Il est à noter que le client RADIUS, c'est-à-dire le serveur EAP, se charge de demander le nom utilisateur et le certificat de l'équipement essayant de se connecter au port contrôlé et les transmet au serveur RADIUS.

Le système RADIUS base son authentification sur le nom utilisateur de l'équipement et, dans le cas d'une authentification EAP-TLS, sur le certificat de l'équipement.

Parmi les fournisseurs de matériel et de logiciel informatique, le système NPS (Network Policy Server) de Microsoft®, intégrant un serveur RADIUS, ou serveur RADIUS NPS, est déjà largement déployé dans les entreprises pour authentifier les équipements : ordinateurs personnel des employés, routeurs sur le réseau local, passerelles entre sous-réseaux ou vers le monde extérieur, etc.

Le système NPS comporte une base d'annuaire. Cependant, le système NPS est de préférence associé au serveur d'annuaire Active Directory de Microsoft®. Celui-ci stocke les comptes des utilisateurs du réseau et une table de correspondance entre nom utilisateur et empreinte du certificat de l'utilisateur. Une empreinte d'un certificat est élaborée à partir des valeurs de certains attributs d'identification de l'utilisateur présents dans le certificat de l'utilisateur.

Ainsi, l'étape au cours de laquelle le serveur AAA valide le certificat du client EAP se déroule de la manière suivante, pour le cas d'un système NPS couplé à un serveur d'annuaire Active Directory : le serveur RADIUS NPS reçoit le nom utilisateur et le certificat du client EAP. Le serveur RADIUS NPS interroge le serveur d'annuaire Active Directory pour savoir si le nom utilisateur est associé à un compte utilisateur. Dans l'affirmative, le serveur RADIUS NPS transmets certains attributs du certificat du client EAP au serveur d'annuaire Active Directory, qui compare les valeurs de ces attributs avec l'empreinte associée au nom utilisateur dans la table de correspondance. En cas de réconciliation, le serveur d'annuaire Active Directory indique au serveur RADIUS que le client peut utiliser le réseau. Le serveur RADIUS poursuit en vérifiant, en utilisant des règles adaptées, d'autres attributs du certificat : vérification de la date de validité, vérification de l'agrément de l'autorité de certification ayant signé le certificat, etc. Si l'issue de ces différentes vérifications est positive, le serveur RADIUS NPS valide le certificat du client EAP. La suite du procédé d'authentification peut alors avoir lieu.

Pour la connexion de téléphones IP au réseau local d'une entreprise, il est souhaitable de pouvoir authentifier ce téléphone IP comme tout autre équipement du réseau.

Le fabricant Cisco® fournit une infrastructure complète associant, dans son système TOIP Cisco®, un serveur d'appel et une architecture PKI.

Cependant, ce système TOIP Cisco® est propriétaire. En tant que tel, il pose un problème de sécurité pour les entreprises voulant atteindre à un niveau de sécurisation élevé de leurs installations. En effet l'autorité de certification des certificats des téléphones IP Cisco® est une autorité par défaut, commune à toutes les implantations du système TOIP Cisco®.

De plus, de nombreuses entreprises sont déjà équipées de système d'authentification NPS de Microsoft®. Si l'entreprise souhaite déployer des téléphones IP, notamment des téléphones IP Cisco®, il lui faudra gérer un système d'authentification spécifiques aux téléphones IP Cisco®, en redondance des serveurs d'authentification déjà installés pour les autres équipements du réseau. Cela représente un surcoût en termes de matériel, de maintenance et de formation des personnels de maintenance à une telle infrastructure propriétaire.

Il y a donc un besoin pour pouvoir authentifier un téléphone IP d'un système TOIP propriétaire, développé par un premier fournisseur (notamment le système TOIP Cisco®), au moyen d'un système d'authentification EAP-TLS ouvert, développé par un second fournisseur (notamment le système d'authentification NPS Microsoft®), et ceci tout en utilisant une architecture PKI externe au système TOIP, de manière à augmenter la sécurité sur le réseau IP.

L'invention a donc pour but de pallier ce problème.

L'invention a pour objet une infrastructure conforme aux revendications.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique d'un mode de réalisation de l'infrastructure selon l'invention ;
- La figure 2 est une représentation schématique des étapes d'un procédé de configuration de l'infrastructure de la figure 1 ; et,

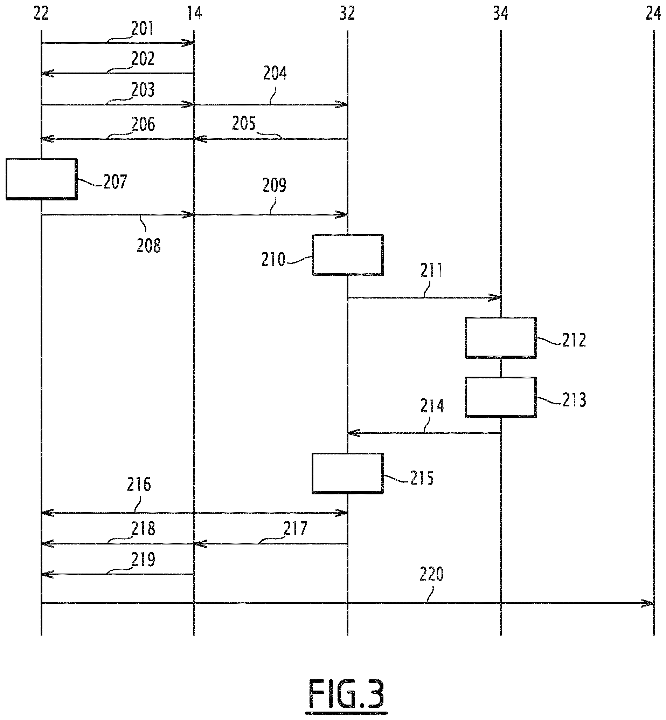

- La figure 3 est une représentation schématique des étapes d'un procédé d'utilisation de l'infrastructure de la figure 1.

### Structure de l'infrastructure

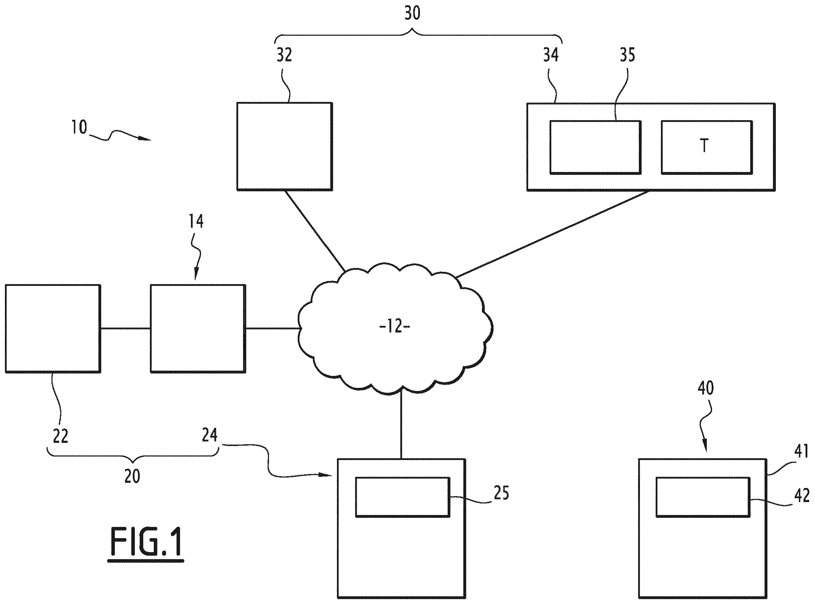

En se référant à la figure 1, une infrastructure 10 associant un système TOIP propriétaire et un système d'authentification EAP-TLS ouvert est représentée.

L'infrastructure 10 a pour support un réseau IP 12, appartenant à une organisation, telle qu'une entreprise.

L'infrastructure 10 comporte un système TOIP 20, un système d'authentification EAP-TLS 30 et une architecture PKI 40.

Le système TOIP 20 est un système propriétaire. Il s'agit notamment du système TOIP Cisco®.

Il comporte une pluralité de téléphones IP 22, dont un seul est représenté sur la figure 1.

Le téléphone IP 22 est connecté au réseau IP local par l'intermédiaire d'un point d'accès 14.

Le système TOIP 20 comporte également un serveur d'appel 24, connecté au réseau IP 12.

Le serveur d'appel 24 du système TOIP Cisco® comporte un module, dénommé module CAPF (Certificate Authority Proxy Function), référencé par le chiffre 25 sur la figure 1. Le module CAPF 25 constitue une architecture PKI pour le système TOIP Cisco® 20, propre à générer des certificats Cisco® pour les téléphones IP 22.

Une demande de certificat pour un téléphone IP 22 ne peut être générée que par le module CAPF 25, pour que les valeurs des attributs contenues dans la demande de certificat et par conséquent dans le certificat final permettent le fonctionnement du téléphone IP 22 avec le serveur d'appel 24. Les modèles des demandes de certificat Cisco® ne sont pas modifiables. Ils sont imposés par Cisco®. Ces modèles peuvent éventuellement être différents selon la version du téléphone IP 22 à certifier.

Une demande de certificat ne peut être signée que par l'autorité de certification du module CAPF 25.

Le système d'authentification EAP-TLS 30 est un système ouvert. Il s'agit notamment du système NPS de Microsoft®.

Il a pour fonction de mettre en oeuvre, pour chaque téléphone IP 22, une authentification selon le standard IEEE 802.1x EAP-TLS lorsque ce téléphone IP se connecte à un port contrôlé d'un point d'accès 14.

Le système d'authentification EAP-TLS 30 comporte un serveur RADIUS 32, notamment le serveur RADIUS NPS de Microsoft®, connecté au réseau IP 12.

Le système d'authentification EAP-TLS 30 comporte un serveur annuaire 34, en particulier le serveur d'annuaire Active Directory de Microsoft®.

Le serveur d'annuaire comporte pour chaque utilisateur autorisé à accéder au réseau IP 12 un compte utilisateur 35, comportant notamment un nom utilisateur, et une table T de mise en correspondance associant à chaque nom utilisateur d'un compte une empreinte d'un certificat de cet utilisateur.

L'architecture PKI externe 40 est représentée schématiquement par le serveur 41 sur la figure 1. Ce serveur 41 peut-être sur ou hors du réseau IP 12, éventuellement sans lien de communication direct avec le réseau IP 12. Par exemple l'architecture PKI externe 40 est la solution fournie par la société Thales.

L'architecture PKI externe 40 comporte une autorité de certification 42 des demandes de certificat qu'il reçoit. Cette autorité de certification.

### Configuration de l'infrastructure

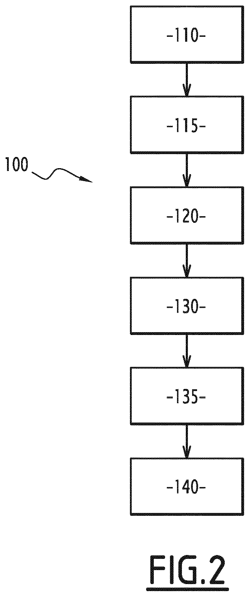

Le procédé 100 de configuration de l'infrastructure présentée ci-dessus est illustrée par le schéma de la figure 2.

A l'étape 110, afin d'augmenter la sécurité d'accès au réseau IP 12, au moyen de l'architecture PKI 40, une demande de certificat est générée pour le module CAPF 25 du serveur d'appel 24, puis signée par l'autorité de certification 42 de l'architecture PKI externe 40, de manière à obtenir un certificat pour le module CAPF 25.

La demande de certificat pour le module CAPF 25 du serveur d'appel 24 est générée par le module CAPF 25 lui-même.

Afin que le certificat du module CAPF 25 puisse être utilisé à la fois par le système de TOIP 20 de Cisco® et par le système d'authentification NPS 30 de Microsoft®, il est nécessaire de modifier la demande de certificat générée pour le module CAPF 25. En effet, certaines valeurs des attributs présents dans la demande de certificat générée pour le module CAPF 25, et par le module CAPF 25, sont incorrectement interprétées par le système Cisco® et/ou le système Microsoft®.

Pour cela, un script est intégré dans l'architecture PKI externe de manière à générer, à partir de la demande de certificat pour le module CAPF 25, une demande de certificat modifiée pour le module CAPF 25. Ce script permet de sélectionner des valeurs compatibles avec les exigences des systèmes Cisco® et NPS pour les attributs de la demande de certificat du module CAPF 25. Une fois signée par l'architecture PKI 40, un certificat modifié pour le module CAPF 25 est délivré et injecté sur le serveur d'appel 24.

Le certificat du module CAPF 25 va notamment permettre de créer une chaîne de certification : un téléphone IP Cisco® est certifié par un certificat Cisco® généré par le module CAPF 25, et le module CAPF 25 est certifié par un certificat généré par une architecture PKI externe

La configuration comporte, à l'étape 115, de génération d'une demande de certificat Cisco® pour chaque téléphone IP 22 en utilisant le module CAPF 25. Celui-ci signe la demande de certificat Cisco® de manière à obtenir un certificat Cisco® qui est stocké sur le téléphone IP correspondant. Un certificat Cisco® comporte notamment un nom utilisateur codé sur au moins 19 caractères, c'est-à-dire un nom utilisateur long LUserName.

A l'étape 120, le procédé de configuration se poursuit par la création de règles dans le serveur RADIUS NPS.

Des premières règle, dites de stratégie réseau, permettent de réaliser des vérifications d'un ensemble de conditions, de contraintes et de paramètres visant à autoriser un téléphone IP à se connecter au réseau et à définir les circonstances dans lesquelles ce téléphone IP peut se connecter.

En particulier, le serveur RADIUS NPS est configuré de manière à modifier une première règle relative à la vérification de l'autorité de certification ayant délivré le certificat Cisco® du téléphone IP 22. Cette règle permet d'extraire du certificat Cisco® du téléphone IP 22, le nom de l'autorité d'authentification, c'est-à-dire du module CAPF 25 ; puis de vérifier le certificat du module CAPF 25, c'est-à-dire le certificat délivré par l'architecture PKI 40. La règle de vérification de l'autorité de certification permet de vérifier la chaîne de certification.

D'autres premières règles sont configurées sur le serveur RADIUS NPS pour vérifier la date de validité du certificat Cisco®, les fonctionnalités associées au certificat Cisco®, etc., ou encore pour vérifier l'existence d'un compte utilisateur (en interrogeant le serveur d'annuaire), ou le fait que le téléphone IP se connecte effectivement en EAP-TLS, etc.

La configuration comporte une étape 130 de création, sur le serveur d'annuaire Active Directory 34, d'un compte utilisateur pour chaque téléphone IP à authentifier. Il s'agit d'associer un nom utilisateur SUserName à chaque téléphone IP.

Le nom utilisateur SUserName dans le serveur d'annuaire Active Directory 34 de Microsoft® est limité à 15 caractères. Un téléphone IP y est donc identifié par un nom utilisateur court.

Cependant, selon le modèle des certificats Cisco®, le nom utilisateur du téléphone IP 22 ne peut être qu'un non utilisateur long LUserName.

Le serveur RADIUS NPS doit donc pouvoir, à partir du nom utilisateur long du certificat Cisco® reçu d'un téléphone IP 22 cherchant à être authentifié, créer une requête d'interrogation du serveur d'annuaire 34 utilisant le nom utilisateur court.

Pour ce faire, à l'étape 135, le serveur RADIUS est configuré par la création de secondes règles, dites de stratégie de demande de connexion, qui définissent des conditions et des paramètres permettant de désigner le serveur devant effectuer une tâche, associée à un message émis par un téléphone IP 22 particulier, telle que l'authentification de ce téléphone IP.

En particulier, le serveur RADIUS NPS est configuré de manière à créer une seconde règle propre à transformer dynamiquement le nom utilisateur long LUserName en nom utilisateur court SUserName. Par exemple le nom court correspond au 15 premier caractères du nom long, de sorte que la transformation dynamique effectuée par le serveur RADIUS est une opération de troncature du nom long présent dans le certificat reçu.

A l'étape 140, il faut enfin créer, dans le serveur d'annuaire Active Directory 34, une table de correspondance permettant de lier le nom utilisateur court SUserName avec une empreinte du certificat Cisco®, de manière à ce que le serveur d'annuaire puisse répondre à une requête du serveur RADIUS NPS 32 de vérification de l'identité d'un certificat Cisco®.

Cette étape comporte donc la création d'une empreinte pour chaque téléphone IP 22 certifié et la création de la table de correspondance nom utilisateur court / empreinte du certificat Cisco®.

Les étapes de configuration présentées ci-dessus peuvent être réalisées dans un autre ordre.

### Fonctionnement de l'infrastructure

Le procédé d'authentification, conforme au standard IEEE 802.1x, est alors le suivant une fois que le téléphone IP 22 a est connecté à un port du point d'accès 14 :
- à l'étape 201, le téléphone IP 22, en tant que client EAP émet un message EAP d'initialisation vers le point d'accès 14, en tant que serveur EAP ;
- à l'étape 202, le point d'accès 14 répond en émettant un message EAP de requête d'identité vers le téléphone IP 22 ;
- à l'étape 203, le téléphone IP 22 envoie son nom utilisateur LUserName dans un message EAP de réponse vers le point d'accès 14 ;
- à l'étape 204, le point d'accès 14 transmet le nom utilisateur LUserName au serveur RADIUS NPS 32, dans une requête d'accès selon un protocole AAA client/serveur particulier, le point d'accès 14 fonctionnant alors en tant que client du protocole AAA ;
- à l'étape 205, le serveur RADIUS NPS 32 répond au point d'accès 14 en lui transmettant son certificat du serveur RADIUS NPS (par exemple créer par l'architecture PKI externe 40) ;
- à l'étape 206, le point d'accès 14 transmet le certificat du serveur RADIUS NPS au téléphone IP 22 ;
- à l'étape 207, le téléphone IP 22 valide le certificat de serveur RADIUS NPS ;
- à l'étape 208, le téléphone IP 22 répond en transmettant son certificat Cisco® au point d'accès 14 ;
- à l'étape 209, le point d'accès 14 transmet le certificat Cisco® au serveur RADIUS NPS ;
- à l'étape 210, le serveur RADIUS NPS lit le nom utilisateur LUserName dans le certificat Cisco® et tronque dynamiquement le nom utilisateur LUserName pour obtenir le nom utilisateur court SUserName ;
- à l'étape 211, le serveur RADIUS NPS transmet le nom court SUserName et le certificat Cisco® au serveur d'annuaire Active Directory 34 ;
- à l'étape 212, le serveur d'annuaire 34 vérifie qu'un compte utilisateur correspond au nom d'utilisateur court SUserName ;
- dans l'affirmative, à l'étape 213, le serveur d'annuaire 34 extrait de la table T l'empreinte de certificat associée au nom d'utilisateur court SUserName, réalise une empreinte du certificat Cisco® reçu du serveur RADIUS NPS et la compare à l'empreinte de certificat extraite de la table T ;
- en cas de concordance, à l'étape 214, le serveur d'annuaire 34 envoi au serveur RADIUS NPS une confirmation d'identification du téléphone IP 22 ;
- à l'étape 215, le serveur RADIUS NPS poursuit alors la vérification du certificat Cisco® en appliquant notamment la règle de vérification de la chaîne de certification ;
- puis, si le serveur RADIUS NPS valide le certificat Cisco® du téléphone IP 22, à l'étape 216, une clé WEP de cryptage est négociée entre le serveur RADIUS NPS et le téléphone IP 22 via le point d'accès 14 ;
- à l'étape 217, le serveur RADIUS NPS transmet au point d'accès 14 un message AAA d'acceptation de la connexion, indicatif d'une authentification réussi, le message AAA d'acceptation contenant la clé WEP ;
- à l'étape 218, le point d'accès 14 envoi au téléphone IP un message EAP de succès ;
- à l'étape 219, le point d'accès 14 envoi au téléphone IP 22 une clé de chiffrement publique et une longueur de clé de chiffrement publique, cryptée avec la clé WEP.

Le téléphone IP 22 peut ainsi accéder au réseau IP 12, et notamment se connecter (étape 220) au serveur d'appel Cisco® 24 en établissant une liaison sécurisée TLS avec celui-ci, le certificat Cisco® modifié du téléphone IP 22 étant à nouveau utilisé au cours de cette étape.

Il est ainsi possible d'authentifier, au moyen du système NPS de Microsoft®, les téléphones IP Cisco®, avec un même certificat compatible entre la composante TOIP Cisco® et la composante d'authentification Microsoft®.

Cette solution permet d'augmenter la sécurité en utilisant une autorité de certification autre que l'autorité par défaut du système de TOIP Cisco®.

Cette solution permet donc une indépendance vis-à-vis des outils Cisco®, aussi bien les outils de certification Cisco® que les outils d'authentification Cisco®.

Dans cette solution, l'authentification de tous les équipements d'une entreprise, téléphones IP et ordinateurs, est centralisée sur un même serveur ou ensemble de serveurs Microsoft®.

Il est possible d'utiliser, en combinaison avec le système de TOIP Cisco®, le système de TOIP de Microsoft®. En effet, cette dernière fonctionne naturellement avec le système d'authentification NPS de Microsoft®. Le réseau est ainsi sécurisé en utilisant un seul type de système d'authentification.

Dans le cas d'un système d'authentification Microsoft® déjà en place, cette solution permet de ne pas modifier le système d'authentification lorsque des téléphones IP Cisco® sont déployés. Sans cette solution, il ne serait pas possible de sécuriser l'accès au réseau des téléphones IP Cisco®. Il faudrait mettre en place le serveur RADIUS ISE de Cisco® à la place du serveur RADIUS NPS de Microsoft®, et, par conséquent, changer l'infrastructure dans son ensemble.

Théoriquement, selon les documentations Cisco®, le système TOIP Cisco® supporte l'utilisation de certificats signés par une autorité de certification externe.

De plus, aucune contre-indication n'est mentionnée quant à la possibilité d'utiliser les certificats Cisco® dans un système d'authentification EAP-TLS, en particulier le système NPS de Microsoft®.

Cependant, lors des tests, il a été constaté des limitations de compatibilité lors de l'analyse par le système d'authentification EAP-TLS des certificats Cisco®.

Ainsi, l'authentification IEEE 802.1X des téléphones IP Cisco® avec un certificat Cisco® n'est pas possible dans le système d'authentification NPS de Microsoft®.

## Revendications

1. Infrastructure d'authentification d'un téléphone IP (22) d'un système de téléphonie sur IP propriétaire par un système d'authentification EAP-TLS ouvert, pour autoriser ledit téléphone IP à accéder à un réseau IP (12), comportant :
- un système de téléphonie sur IP propriétaire comportant un serveur d'appel (24) connecté au réseau IP, intégrant un module de certification (25) propre à générer un certificat propriétaire d'authentification d'un téléphone IP ;
- une architecture de certification externe (40) ;
- un système d'authentification EAP-TLS comportant un serveur RADIUS (32) et un serveur d'annuaire (34),
**caractérisée en ce que** :
- l'architecture de certification externe est propre à signer une demande de certification du module de certification du serveur d'appel de manière à obtenir un certificat pour le module de certification (25) ;
- le serveur RADIUS comporte une règle de vérification des certificats permettant de vérifier l'intégralité de la chaîne de certification constituée du certificat propriétaire d'authentification dudit téléphone IP généré par le module de certification du serveur d'appel et du certificat du module de certification du serveur d'appel obtenu par l'architecture de certification externe, et
le serveur d'annuaire (34) comporte un compte utilisateur pour chaque téléphone IP autorisé à accéder au réseau IP (12) et une table de correspondance associant à chaque nom d'utilisateur d'un compte utilisateur, une empreinte du certificat propriétaire d'authentification dudit téléphone IP.

2. Infrastructure selon la revendication 1, dans laquelle l'architecture de certification externe (40) est propre à modifier des attributs de la demande de certificat du module de certification du serveur d'appel, avant de signer la demande de certificat modifiée, le certificat modifié obtenu étant compatible à la fois du système de téléphonie sur IP et du système d'authentification EAP-TLS.

3. Infrastructure selon la revendication 1 ou la revendication 2, dans laquelle le serveur RADIUS (32) est propre à réaliser dynamiquement une correspondance entre un nom utilisateur propriétaire (LUserName) dudit téléphone IP, indiqué dans le certificat reçu d'un téléphone IP (22) devant être authentifié, et un nom utilisateur (SUserName) dudit téléphone IP indiqué dans le compte utilisateur correspondant audit téléphone IP dans le serveur d'annuaire.

4. Infrastructure selon l'une quelconque des revendications précédentes, dans laquelle le système de téléphonie sur IP est un système Cisco®, propre à fonctionner avec un téléphone IP Cisco® et comportant un serveur d'appel « Cisco® Unified Communications Manager », de préférence dans sa version 8.6, le module de certification (25) étant alors constitué par le module « Certificate Authority Proxy Function » dudit serveur d'appel (24).

5. Infrastructure selon l'une quelconque des revendications précédentes, dans laquelle le système d'authentification EAP-TLS ouvert est un système NPS de Microsoft®, intégrant un serveur RADIUS NPS, de préférence en combinaison avec un serveur d'annuaire Active Directory.

## Patentansprüche

1. Infrastruktur zur Authentifizierung eines IP-Telefons (22) eines proprietären IP-Telefoniesystems durch ein offenes EAP-TLS-Authentifizierungssystem, um dem IP-Telefon den Zugriff auf ein IP-Netzwerk (12) zu ermöglichen, aufweisend:
- ein proprietäres IP-Telefoniesystem, das einen mit dem IP-Netzwerk verbundenen Anrufserver (24) aufweist, der ein Zertifizierungsmodul (25) integriert, das geeignet ist, ein proprietäres Authentifizierungszertifikat eines IP-Telefons zu erzeugen;
- eine externe Zertifizierungsarchitektur (40);
- ein EAP-TLS-Authentifizierungssystem, das einen RADIUS-Server (32) und einen Verzeichnisserver (34) aufweist,
dadurch charakterisiert, dass:
- die externe Zertifizierungsarchitektur geeignet ist, eine Anforderung zur Zertifizierung des Zertifizierungsmoduls des Anrufservers zu signieren, um ein Zertifikat für das Zertifizierungsmodul (25) zu erhalten;
- der RADIUS-Server eine Zertifikatsüberprüfungsregel enthält, die es ermöglicht, die gesamte Zertifizierungskette zu überprüfen, die aus dem proprietären durch das Zertifizierungsmodul des Anrufservers erzeugten Zertifikat des IP-Telefons und dem durch die externe Zertifizierungsarchitektur erhaltene Zertifikat des Anrufserver-Zertifizierungsmoduls gebildet wird, und
der Verzeichnisserver (34) ein Benutzerkonto für jedes IP-Telefon, das für den Zugriff auf das IP-Netzwerk (12) berechtigt ist und eine Korrespondenztabelle aufweist, die jedem Benutzernamen eines Benutzerkontos einen Fingerabdruck des proprietären Authentifizierungszertifikats des entsprechenden IP-Telefons, zuordnet.

2. Infrastruktur nach Anspruch 1, wobei die externe Zertifizierungsarchitektur (40) geeignet ist, Attribute der Zertifikatanforderung des Zertifizierungsmoduls des Anrufservers zu modifizieren, bevor sie die modifizierte Zertifikatanforderung signiert, wobei das erhaltene modifizierte Zertifikat sowohl mit dem IP-Telefoniesystem als auch mit dem EAP-TLS-Authentifizierungssystem kompatibel ist.

3. Infrastruktur nach Anspruch 1 oder 2, wobei der RADIUS-Server (32) dazu geeignet ist, dynamisch eine Korrespondenz zwischen einem proprietären Benutzernamen (LUserName) des IP-Telefons, der in dem empfangenen Zertifikat von einem zu authentifizierenden IP-Telefon (22) angegeben ist, und einem Benutzernamen (SUserName) des IP-Telefons, der in dem Benutzerkonto angezeigt ist, das dem IP-Telefon in dem Verzeichnisserver entspricht, realisiert.

4. Infrastruktur nach einem der vorhergehenden Ansprüche, wobei das IP-Telefoniesystem ein Cisco®-System ist, das geeignet ist, mit einem Cisco®-IP-Telefon zu arbeiten und einen "Cisco® Unified Communications Manager"-Anrufserver, vorzugsweise in seiner Version 8.6, aufweist, wobei das Zertifizierungsmodul (25) dann durch das "Certificate Authority Proxy Function" -Modul des Anrufservers (24) gebildet wird.

5. Infrastruktur nach einem der vorhergehenden Ansprüche, wobei das offene EAP-TLS-Authentifizierungssystem ein Microsoft® NPS-System ist, das einen NPS-RADIUS-Server integriert, vorzugsweise in Kombination mit einem Active Directory-Verzeichnisserver.

## Claims

1. An infrastructure for authenticating an IP telephone (22) of a proprietary IP telephony system by means of an open EAP-TLS authentication system, in order to authorize said IP telephone to access an IP network (12), comprising:
- a proprietary IP telephony system including a call server (24) connected to the IP network, integrating a certification module (25) for generating a authenticating proprietary certificatation for an IP telephone;
- an external certification architecture (40);
- an EAP-TLS authentication system including a RADIUS server (32) and a directory server (34),
**characterized in that**:
- the external certification architecture is capable of signing a certification request from the certification module of the call server so as to obtain a certificate for the certification module (25);
- the RADIUS server includes a rule for verifying certificates consisting of verifying the entire certification chain made of the authenticating proprietary certification of said IP telephone generated by the certification module of the call server and the certification of the certification module of the call server by the external certification architecture, and
the directory server (34) including a user account for each IP telephone authorized to access the IP network (12) and a match table associating a signature of the authenticating proprietary certificatation of said IP telephone with each username of a user account.

2. The infrastructure according to claim 1, wherein the external certification architecture (40) is capable of modifying attributes of the certificate request from the certification module of the call server, before signing the modified certificate request, the modified certificate obtained being compatible both with the proprietary IP telephony system and the EAP-TLS authentication system.

3. The infrastructure according to claim 1 or claim 2, wherein the RADIUS server (32) is capable of performing a dynamic matching between a proprietary username (LUserNAme) of an IP telephone, indicated in the certificate received from an IP telephone (22) to be authenticated, and a username (SUserName) of the IP telephone indicated in the user account corresponding to said IP telephone in the directory server.

4. The infrastructure according to any one of the previous claims, wherein the IP telephony system is a Cisco® system, capable of working with a Cisco® IP telephone and including a "Cisco® Unified Communications Manager" call server, preferably in its version 8.6, the certification module (25) then consisting of the "Certificate Authority Proxy Function" module of said call server (24).

5. The infrastructure according to any one of the previous claims, wherein the open EAP-TLS authentication system is a Microsoft® NPS system, integrating a NPS RADIUS server, preferably combined with an Active Directory server.
